**Europäisches Patentamt**

**European Patent Office**

**Office européen des brevets**

(11) Veröffentlichungsnummer: **0 383 971**

**A1**

# EUROPÄISCHE PATENTANMELDUNG

(21) Anmeldenummer: 89103111.4

(51) Int. Cl.⁵: **B60L 9/30**

(22) Anmeldetag: 22.02.89

(43) Veröffentlichungstag der Anmeldung:
**29.08.90 Patentblatt 90/35**

(84) Benannte Vertragsstaaten:
**DE**

(71) Anmelder: **Siemens Aktiengesellschaft
Wittelsbacherplatz 2
D-8000 München 2(DE)**

(72) Erfinder: **Fuchs, Andreas, Dr.-Ing.
Eskilstunastrasse 21
D-8520 Erlangen(DE)**

(54) **Einspeiseschaltung für eine Mehrsystemlokomotive.**

(57) Die Erfindung bezieht sich auf eine Einspeiseschaltung (16) für eine Mehrsystemlokomotive, wobei die Einspeiseschaltung (16) einen ersten und zweiten Stromrichter (18, 20) enthält, die jeweils mittels eines ersten und zweiten Zwischenkreiskondensators (10, 12) mit einem ersten und zweiten Wechselrichter (6, 8) elektrisch leitend verbunden sind. Erfindungsgemäß sind die wechselstromseitigen Anschlüsse (22, 28) der ersten Brückenzweige (24, 30) und die wechselstromseitigen Anschlüsse (32, 38) der zweiten Brückenzweige (34, 40) der beiden Stromrichter (18, 20) mittels Induktivitäten (26, 36) miteinander verbunden, wobei die Stromrichterventile (V13, V14) des zweiten Brückenzweiges des ersten Stromrichters (18) und die Stromrichterventile (V21, V22) des ersten Brückenzweiges (30) des zweiten Stromrichters (20) mittels einer Steuerschaltung (52), die in Abhängigkeit einer Eingangsgleichspannung ($U_E$) und einer Zwischenkreis-Sollspannung ($U_{Ksoll}$) Steuersignale erzeugt, ansteuerbar sind, wogegen die anderen Stromrichterventile (V11, V12, V23, V24) der beiden Stromrichter (18, 20) mittels einer weiteren Steuerschaltung (58) getaktet ansteuerbar sind. Somit erhält man eine Einspeiseschaltung (16) für eine Mehrsystemlokomotive, mit der man bei Gleichspannungs- und Wechselspannungseinspeisung eine geregelte Zwischenkreis-Istspannung ($U_{K1}$, $U_{K2}$) erhält.

FIG 1

EP 0 383 971 A1

## Einspeiseschaltung für eine Mehrsystemlokomotive

Die Erfindung bezieht sich auf eine Einspeiseschaltung für eine Mehrsystemlokomotive, wobei die Einspeiseschaltung einen ersten und zweiten Stromrichter enthält, die jeweils mittels eines ersten und zweiten Zwischenkreiskondensators mit einem ersten und zweiten Wechselrichter elektrisch leitend verbunden sind.

Mehrsystemlokomotiven sind für Gleichspannungs- und Wechselspannungsbetrieb ausgelegt. Im Gleichspannungsbetrieb werden die Zwischenkreiskondensatoren jeweils über einen Schalter oder eine Reihenschaltung aus wenigstens zwei Zwischenkreiskondensatoren mit einem Gleichspannungsnetz verbunden. Im Wechselspannungsbetrieb wird die Primärwicklung des Traktionstransformators mit einem Wechselspannungsnetz 15 kV 16 2/3 Hz bzw. 25 kV 50 Hz verbunden, dessen Sekundärwicklungen jeweils über Wechselstromanschlüsse eines Stellgliedes mit einem Stellglied, auch Vierquadrantensteller 4 q-S genannt, verbunden sind. Mittels der Steller kann an jedem Zwischenkreiskondensator eine vorbestimmte Zwischenkreisspannung eingestellt werden, unabhängig von der Eingangswechselspannung des Wechselspannungsnetzes. Beim Gleichspannungsbetrieb ist das Gleichspannungsnetz in Abhängigkeit der Netzspannung entweder jeweils mit einem Zwischenkreiskondensator oder mit einer Reihenschaltung wenigstens zweier Zwischenkreiskondensatoren verbunden. Deshalb wirken sich Netzspannungsschwankungen auch voll auf die Zwischenkreisspannung aus. Dadurch wird der jeweilige nachgeschaltete Wechselrichter nicht aus einem starren Zwischenkreis versorgt, wodurch Einbußen in der Zugkraft im Feldschwächbereich, verursacht durch Netzspannungseinbrüche, in Kauf genommen werden müssen.

Der Erfindung liegt nun die Aufgabe zugrunde, eine Einspeiseschaltung für eine Mehrsystemlokomotive anzugeben, wodurch auch bei Gleichspannungsversorgung am Zwischenkreis eine geregelte Zwischenkreisspannung unahbängig von der Eingangsgleichspannung ansteht.

Diese Aufgabe wird erfindungsgemäß durch die kennzeichnenden Merkmale des Anspruchs 1 gelöst.

Durch die Verbindung des ersten Brückenzweiges des ersten Stromrichters mit dem ersten Brückenzweig des zweiten Stromrichters und des zweiten Brückenzweiges des ersten Stromrichters mit dem zweiten Brückenzweig des zweiten Stromrichters jeweils mittels einer Induktivität, kann man in Abhängigkeit der Eingangsspannung bezogen auf die Zwischenkreissollspannung und der daraus resultierenden Steuerspannung die beiden Zwischenkreiskondensatoren parallel oder in Reihe schalten. Durch pulsbreitenmodulierte Steuerspannungen für die Stromrichterventile des zweiten Brückenzweiges des ersten Stromrichters und des ersten Brückenzweiges des zweiten Stromrichters kann man die Zwischenkreisspannung auch bei einer Gleichspannungsversorgung auf eine vorbestimmte Zwischenkreis-Sollspannung regeln. Somit erhält man am Zwischenkreis immer eine auf eine Sollspannung geregelte Zwischenkreisspannung unabhängig von der Netzspannung eines speisenden Gleichspannungsnetzes.

In einer vorteilhaften Ausgestaltung der Einspeiseschaltung ist jeweils als Induktivität eine Sekundärwicklung eines Transformators mit großer Streuung vorgesehen, wobei bei Gleichspannungseinspeisung die Primärwicklung überbrückbar ist. Dadurch kann man ohne zusätzlichen Bauteileaufwand die Einspeiseschaltung bei einer Gleichspannungseinspeisung und bei einer Wechselspannungseinspeisung verwenden, da bei Gleichspannungsbetrieb jeweils die große Streuinduktivität als Verbindungsinduktivität wirksam wird und bei Wechselspannungseinspeisung durch Parallelschalten der beiden Stromrichter zwei parallel geschaltete Stellglieder bzw. Vierquadrantensteller entstehen, die auf eine gemeinsame Stromschiene speisen. Somit erhält man ohne eine große Anzahl von Schützen und Schaltern eine Einspeiseschaltung, die am Zwischenkreiskondensator eine geregelte Kondensatorspannung erzeugt, unabhängig von der Netzspannungsversorgung und unabhängig von der Netzspannung.

Zur weiteren Erläuterung der Erfindung wird auf die Zeichnung Bezug genommen, in der Ausführungsbeispiele nach der Erfindung schematisch veranschaulicht sind.

Figur 1 zeigt einen Traktionsantrieb für eine Mehrsystemlokomotive mit der erfindungsgemäßen Speiseschaltung, in

Figur 2 ist eine erzeugte Schaltungsvariante der Einspeiseschaltung dargestellt,

Figur 3 veranschaulicht eine weitere Erfindungsvariante der Einspeiseschaltung, in

Figur 4 sind der Eingangsstrom und die Stellerströme der Einspeiseschaltung in einem Diagramm über dem Lastverteilfaktor k dargestellt, in

Figur 5 sind der Eingangsstrom und die Stellerströme der Einspeiseschaltung im Bremsbetrieb in einem Diagramm über dem Laststrom aufgetragen und die

Figur 6 zeigt eine weitere Ausführungsform der Einspeiseschaltung für drei Antriebe.

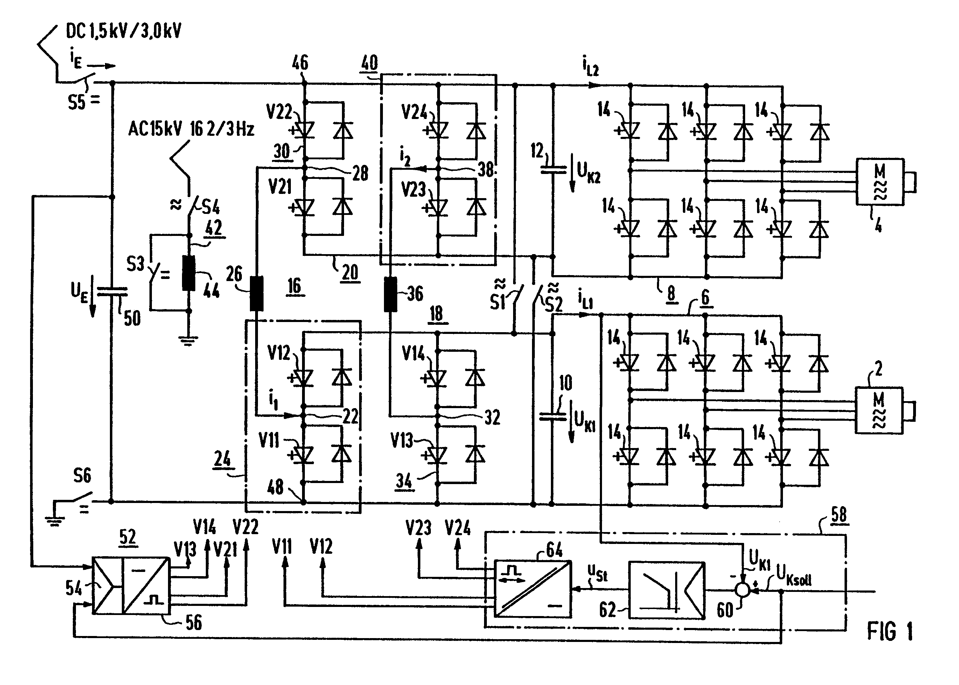

In Figur 1 ist ein Traktionsantrieb mit zwei Drehstrommotoren 2 und 4 für eine Mehrsystemlokomotive dargestellt. Der Drehstrommotor 2 bzw. 4 wird mittels eines Wechselrichters 6 bzw. 8 aus einem Zwischenkreiskondensator 10 bzw. 12 versorgt. Als Stromrichterventile 14 der beiden Wechselrichter 6 und 8 können Thyristoren, Transistoren und GTO-Thyristoren (Gate Turn Off) verwendet werden, wobei in dieser Darstellung GTO-Thyristoren vorgesehen sind. Die beiden Zwischenkreiskondensatoren 10 und 12 sind eingangsseitig mit einer Einspeiseschaltung 16 verknüpft.

Die Einspeiseschaltung 16 besteht aus einem ersten und zweiten selbstgeführten vierpulsigen Stromrichter 18 und 20. Der wechselstromseitige Eingang 22 eines ersten Brückenzweiges 24 des ersten Stromrichters 18 ist über eine Induktivität 26 mit einem wechselstromseitigen Eingang 28 eines ersten Brückenzweiges 30 des zweiten Stromrichters 20 verknüpft. Ein wechselstromseitiger Eingang 32 eines zweiten Brückenzweiges 34 des ersten Stromrichters 18 ist ebenfalls über eine Induktivität 36 mit einem wechselstromseitigen Eingang 38 eines zweiten Brückenzweiges 40 des zweiten Stromrichters 20 verbunden. Als Stromrichterventile V11 bis V14 des ersten Stromrichters 18 sind GTO-Thyristoren vorgesehen, die jeweils mit einer antiparallelen Diode versehen sind. Auch die Stromrichterventile V2l bis V24 des zweiten Stromrichters 20 sind GTO-Thyristoren, die ebenfalls jeweils mit einer antiparallelen Diode versehen sind. Die beiden Stromrichter 18 und 20 sind bei Wechselspannungsversorgung mittels der Schalter S1 und S2 parallel schaltbar. Als Induktivität 26 bzw. 36 ist eine Sekundärwicklung eines Transformators 42, mit großer Streuinduktivität, auch Traktionstransformator genannt, vorgesehen. Die Primärwicklung 44 dieses Transformators 42 ist bei Gleichspannungsversorgung mittels eines Schalters S3 überbrückbar. Außerdem ist die Primärwicklung 44 über einen Schalter S4 und einem Stromabnehmer mit einem Wechselspannungsnetz verbindbar. Als Wechselspannungsnetz kann beispielsweise ein 15 kV 16 2/3 Hz- bzw. ein 25 kV 50 Hz-Netz vorgesehen sein. Ein positiver gleichstromseitiger Anschluß 46 des zweiten Stromrichters 20 ist über einen Schalter S5 und einen Stromabnehmer mit einem Gleichspannungsnetz verbindbar, wobei als Gleichspannungsnetz ein 1,5 kV- bzw. ein 3,0 kV-Netz vorgesehen sein kann. Ein negativer gleichstromseitiger Anschluß 48 des ersten Stromrichters 18 ist über einen Schalter S6 mit dem Erdpotential verbindbar. Zu diesen gleichstromseitigen Anschlüssen 46 und 48 ist ein Stützkondensator 50 elektrisch parallel geschaltet.

Eine Steuerschaltung 52, der eine Eingangsgleichspannung $U_E$ und eine Zwischenkreis-Sollspannung $U_{Ksoll}$ zugeführt ist, erzeugt in Abhängigkeit der Eingangsgleichspannung $U_E$ bezogen auf die Zwischenkreis-Sollspannung $U_{Ksoll}$ Steuersignale für die Stromrichterventile V13 und V14 des ersten Stromrichters 18 und für die Stromrichterventile V21 und V22 des zweiten Stromrichters 20. Eingangsseitig weist dieses Steuerschaltung 52 einen Komparator 54 auf, dessen Ausgang mit einem Steuersatz 56 verknüpft ist. Dieser Steuersatz 56 erzeugt in Abhängigkeit der Polarität des Ausgangssignals des Komparators 54 Steuersignale für die Stromrichterventile V14 und V21 oder für die Stromrichterventile V13 und V22. Als Steuersignale stehen an den Ausgängen des Steuersatzes 56 Dauersignale an.

Die Stromrichterventile V11 und V12 des ersten Stromrichters 18 und die Stromrichterventile V23 und V24 des zweiten Stromrichters 20 erhalten pulsbreitenmodulierte Steuersignale von einer weiteren Steuerschaltung 58. Diese Steuerschaltung 58 enthält eingangsseitig einen Differenzbildner 60, dem ein Spannungsregler 62 nachgeschaltet ist. Der Ausgang dieses Spannungsreglers 62 ist mit einem Steuersatz 64 verknüpft, der aus der vom Spannungsregler 62 erzeugten Steuerspannung $u_{St}$ pulsbreitenmodulierte Steuersignale für die Stromrichterventile V11, V12, V23 und V24 der Stromrichter 18 und 20 bildet. Die Steuerspannung $u_{St}$ wird mittels des Differenzbildners 60 der die Differenzspannung zwischen der Zwischenkreis-Istspannung $U_{K1}$ eines Zwischenkreises und einer vorbestimmten Zwischenkreis-Sollspannung $U_{Ksoll}$ ermittelt, gebildet und dem Spannungsregler 62 zugeführt.

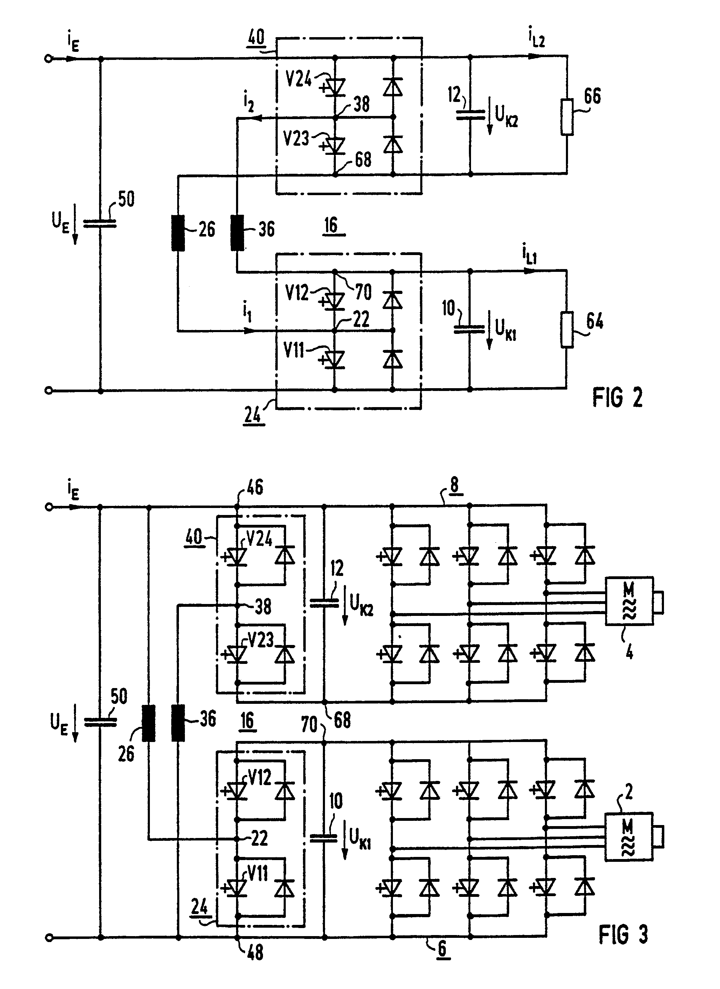

Die Figur 2 zeigt eine erzeugte Schaltungsvariante der Einspeiseschaltung 16, wobei der erste und zweite Wechselrichter 6 und 8 mit nachgeschaltetem Drehstrommotor 2 und 4 jeweils als Widerstand 64 und 66 dargestellt sind, der jeweils elektrisch parallel zum Zwischenkreiskondensator 10 und 12 geschaltet ist. Diese Schaltungsvariante entsteht aus der Einspeisung 16 nach Figur 1, wenn das Stromrichterventil V14 des zweiten Brückenzweiges 34 des ersten Stromrichters 18 und das Stromrichterventil V21 des ersten Brückenzweiges 30 des zweiten Stromrichters 20 durchgesteuert wird. Dadurch wird der wechselstromseitige Eingang 22 des ersten Brückenzweiges 24 des ersten Stromrichters 18, auch Steiler 24 genannt, über die Induktivität 26 mit einem negativen gleichspannungsseitigen Anschluß 68 des zweiten Brückenzweiges 40 des zweiten Stromrichters 20 elektrisch leitend verbunden. Der wechselstromseitige Eingang 38 des zweiten Brückenzweiges 40 des zweiten Stromrichters 20, auch Steiler 40 genannt, ist elektrisch leitend über die Induktivität 36 mit einem positiven gleichspannungsseitigen Anschluß 70 des ersten Brückenzweiges 24 des ersten Stromrichters 18 verbunden. Somit ist aus der Einspeiseschaltung 16 nach Figur 1 eine Einspeiseschaltung 16, bestehend aus zwei Aufwärtsstellern, durch Durchsteuern der Stromrichterventile V14 und V21 geworden. Solange die Eingangsgleichspannung $U_E$ größer gleich der Zwischenkreis-Sollspannung $U_{Ksoll}$ und kleiner gleich der doppelten Zwischenkreis-Sollspannung $U_{Ksoll}$ ist, werden die Stromrichterventile V14 und V21 von der Steuerschaltung 52 angesteuert, wodurch diese Schaltungsvariante der Einspeiseschaltung 16 erhalten bleibt.

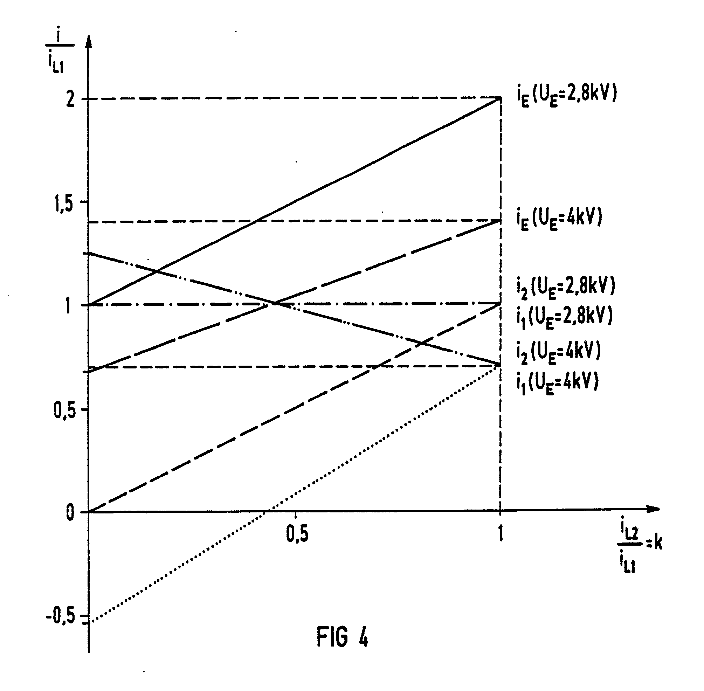

In Abhängigkeit der Zwischenkreis-Sollspannung $U_{Ksoll}$ zur Zwischenkreis-Istspannung $U_{K1}$ bzw. $U_{K2}$ stellt sich jeweils eine Stelleraussteuerung a, die proportional zur Steuerspannung $u_{St}$ des Spannungsreglers 62 ist, ein. Bei einer Eingangsgleichspannung $U_E$ gleich der Zwischenkreis-Sollspannung $U_{Ksoll}$ stellt sich eine Stelleraussteuerung a = 1 ein, so daß die Zwischenkreis-Istspannung $U_{K1}$ bzw. $U_{K2}$ gleich der Zwischenkreis-Sollspannung $U_{Ksoll}$ ist. Die Stelleraussteuerung a = 1 bedeutet, daß das Stromrichterventil V11 des ersten Stellers 24 und das Stromrichterventil V24 des zweiten Stellers 40 durchgesteuert sind. Dadurch sind die Zwischenkreiskondensatoren 10 und 12 elektrisch parallel geschaltet. Wenn nun die Eingangsgleichspannung $U_E$ gleich der doppelten Zwischenkreis-Sollspannung $U_{Ksoll}$ ist, stellt sich eine Stelleraussteuerung a = 0 ein, so daß die Zwischenkreis-Istspannung $U_{K1}$ bzw. $U_{K2}$ gleich der Zwischenkreis-Sollspannung $U_{Ksoll}$ ist. Die Stelleraussteuerung a = 0 bedeutet, daß das Stromrichterventil V12 des ersten Stellers 24 und das Stromrichterventil V23 des zweiten Stellers 40 durchgesteuert sind. Dadurch sind die Zwischenkreiskondensatoren 10 und 12 elektrisch in Reihe geschaltet. Für die Stelleraussteuerungen a, die größer Null und kleiner Eins sind, erzeugt die weitere Steuerschaltung 58 für die Stromrichterventile V11 und V12 des ersten Stellers 24 und für die Stromrichterventile V23 und V24 des zweiten Stellers 40 pulsbreitenmodulierte Steuersignale. In der Figur 4 sind der Eingangsstrom $i_E$ und die Stellerströme $i_1$ und $i_2$ in Abhängigkeit eines Lastverteilfaktors k = $i_{L2}/i_{L1}$ in einem Diagramm dargestellt. Dabei ist einmal für die Eingangsgleichspannung $U_E$ der Wert der Zwischenkreis-Sollspannung $U_{Ksoll}$ = 2,8 kV und einmal eine Überspannung der Eingangsgleichspannung mit einem Wert $U_E$ = 4 kV angenommen worden. Außerdem ist eine unsymmetrische Lastverteilung, nämlich $i_{L1}$ = konstant und $i_{L2}$ variabel, angenommen worden. In Abhängigkeit der Stelleraussteuerung a > 0 ist jede beliebige Lastverteilung möglich.

Die Figur 3 zeigt eine weitere erzeugte Schaltungsvariante der Einspeiseschaltung 16 nach Figur 1. Diese Schaltungsvariante entsteht, wenn mittels der Steuerschaltung 52 das Stromrichterventil V13 des zweiten Brückenzweiges 34 des ersten Stromrichters 18 und das Stromrichterventil V22 des ersten Brückenzweiges 30 des zweiten Stromrichters 20 durchgeschaltet werden. Dadurch wird der wechselstromseitige Eingang 22 des ersten Brückenzweiges 24 des ersten Stromrichters 18 bzw. Stellers 24 über die Induktivität 26 mit dem positiven gleichspannungsseitigen Anschluß 46 des zweiten Stellers 40 und der wechselstromseitige Eingang 38 des zweiten Brückenzweiges 40 des zweiten Stromrichters 20 bzw. des zweiten Stellers 40 über die Induktivität 36 mit dem negativen gleichspannungsseitigen Anschluß 48 des ersten Stellers 24 elektrisch leitend verbunden. Die Stromrichterventile V13 und V22 werden genau dann von der Steuerschaltung 50 angesteuert, wenn die Eingangsgleichspannung $U_E$ kleiner ist als die Zwischenkreis-Sollspannung $U_{Ksoll}$. Damit an den Zwischenkreiskondensatoren 10 und 12 jeweils eine auf die Zwischenkreis-Sollspannung $U_{Ksoll}$ geregelte Zwischenkreis-Istspannung $U_{K1}$ bzw. $U_{K2}$ ansteht, werden das Stromrichterventil V12 des ersten Stellers 24 und das Stromrichterventil V23 des zweiten Stellers 40 durchgesteuert. Somit sind die Zwischenkreiskondensatoren 10 und 12 elektrisch parallel geschaltet. Bei sinkender Eingangsgleichspannung $U_E$ werden die Stromrichterventile V11 und V12 des ersten Stellers 24 und die Stromrichterventile V23 und V24 des zweiten Stellers 40 derart mit pulsbreitenmodulierten Steuersignalen angesteuert, daß der Steller 24 und der Steller 40 in Verbindung mit den Induktivitäten 26 und 36 als Aufwärtssteller arbeiten, so daß an den gleichspannungsseitigen Anschlüssen 48 und 70 des ersten Stellers 24 und an den gleichspannungsseitigen Anschlüssen 68 und 46 des zweiten Stellers 40 jeweils eine auf die Zwischenkreis-Sollspannung $U_{Ksoll}$ geregelte Zwischenkreis-Istspannung $U_{K1}$ und $U_{K2}$ ansteht.

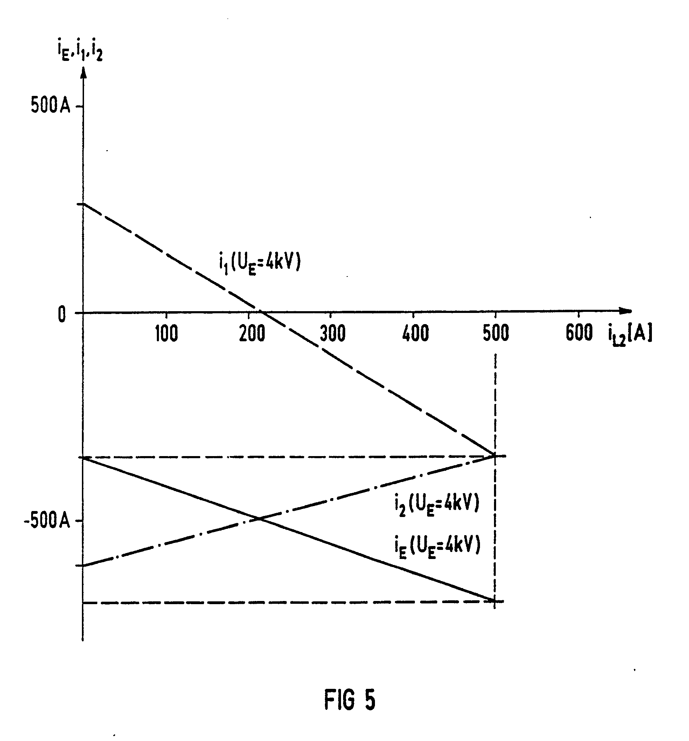

Mit der Einspeiseschaltung 16 nach Figur 1 bzw. der Schaltungsvarianten nach Figuren 2 und 3 ist auch eine Nutzbremsung möglich. In Figur 5 sind der Eingangsstrom $i_E$ und die Stellerströme $i_1$ und $i_2$ in einem Diagramm über dem Laststrom $i_{L2}$ aufgetragen, wobei ein Laststrom $I_{L1}$ = -500 A und eine Zwischenkreisspannung $U_{K1}$ = $U_{K2}$ = 2,8 kV angenommen ist.

Somit erhält man mit der Einspeiseschaltung 16 nach Figur 1 einen Gleichspannungsstellbereich ohne Umschaltung von Eingangsgleichspannung $U_E$ größer gleich Null bis Eingangsgleichspannung $U_E$ kleiner gleich doppelter Wert der Zwischenkreis-Sollspannung $U_{Ksoll}$.

Bei Wechselspannungseinspeisung aus einem 15 kV 16 2/3 Hz- bzw. 15 kV 50 Hz-Netz werden die Schalter S3, S5 und S6 geöffnet und die Schalter S1, S2 und S4 geschlossen. Dadurch sind der erste Stromrichter 18 und der zweite Stromrichter 20 elektrisch parallel geschaltet, wobei die eine Sekundärwicklung 26 des Transformators 42 den wechselstromseitigen Eingang 22 des ersten Brückenzweiges 24 des ersten Stromrichters 18 mit dem wechselstromseitigen Eingang 28 des ersten Brückenzweiges 30 des zweiten Stromrichters 20 und die Sekundärwicklung 36 des Transformators 42 den wechselstromseitigen Eingang 32 des zweiten Brückenzweiges 34 des ersten Stromrichters 18 mit dem wechselstromseitigen Eingang 39 des zweiten Brückenzweiges 40 des zweiten Stromrichters 20 elektrisch leitend verbinden. Dadurch bilden bei Wechselspannungseinspeisung der erste Brückenzweig 24 des ersten Stromrichters 18 und der erste Brückenzweig 30 des zweiten Stromrichters 20 einen ersten Vierquadrantensteller und der zweite Brückenzweig 34 des ersten Stromrichters 18 und der zweite Brückenzweig 40 des zweiten Stromrichters 20 einen zweiten Vierquadrantensteller. Diese beiden Vierquadrantensteller speisen in eine gemeinsame Gleichspannungsschiene, an der die beiden Zwischenkreiskondensatoren 10 und 12 mit nachgeschalteten Wechselrichtern 6 und 8 elektrisch parallel angeschlossen sind.

Durch die Gestaltung der erfindungsgemäßen Einspeiseschaltung 16 für eine Mehrsystemlokomotive erhält man bei Gleichspannungseinspeisung und bei Wechselspannungseinspeisung immer eine geregelte Zwischenkreisspannung $U_{K1}$ und $U_{K2}$.

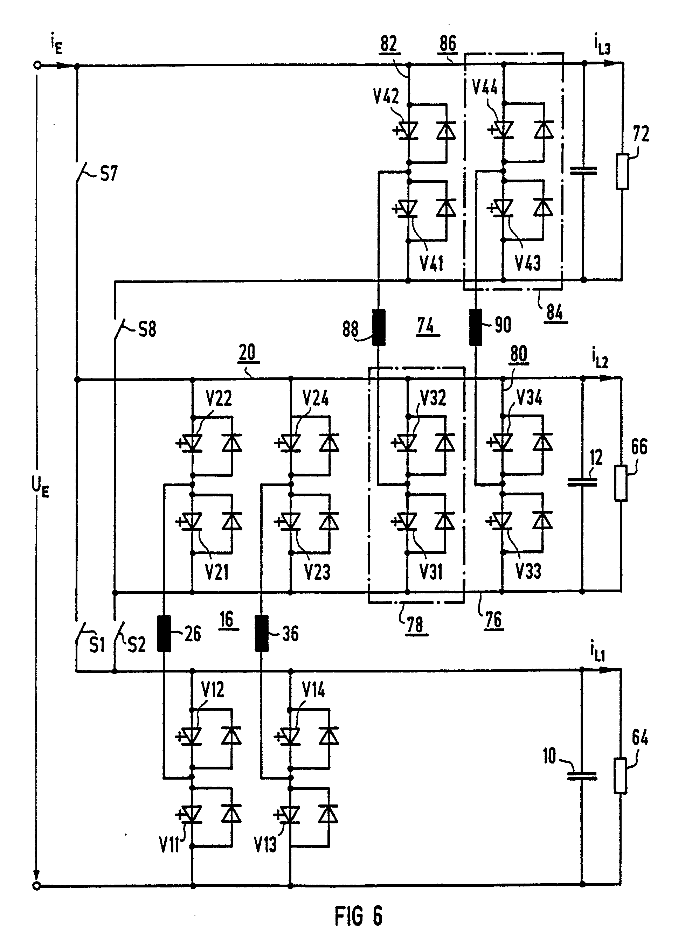

In Figur 6 ist ein Traktionsantrieb mit drei Wechselstrommotoren dargestellt, wobei jeweils der Wechselrichter mit nachgeschalteten Wechselstrommotor als Widerstand 64, 66 und 72 dargestellt ist. Der Traktionsantrieb gemäß Figur 1 ist somit um einen Antrieb erweitert worden. Deshalb sind gleiche Bauelemente der Figur 1 und der Figur 6 mit denselben Bezugszeichen versehen. Gegenüber der Ausführungsform nach Figur 1 ist eine zweite Einspeiseschaltung 74 vorgesehen, deren erster Stromrichter 76 elektrisch parallel zum zweiten Stromrichter 20 der Einspeiseschaltung 16 geschaltet ist. Der weitere Aufbau der Einspeiseschaltung 74 entspricht dem Aufbau der Einspeiseschaltung 16. Auch die Brückenzweige 78, 80, 82 und 84 der beiden Stromrichter 76 und 86 der Einspeiseschaltung 74 sind mittels Induktivitäten 88 und 90 untereinander verbunden. Mit Hilfe zweier weiterer Schalter S7 und S8 sind die Stromrichter 76 und 86 elektrisch parallel schaltbar, sobald eine Wechselspannung eingespeist wird. Durch die Erweiterung des Traktionsantriebs nach Figur 1 auf drei Antriebsmotoren kann die erfindungsgemäße Einspeiseschaltung 16 und 74 auch bei Mehrsystemlokomotiven verwendet werden, bei denen jeweils drei Wechselstrommotoren in einem Drehgestell untergebracht sind.

**Ansprüche**

1. Einspeiseschaltung (16) für eine Mehrsystemlokomotive, wobei die Einspeiseschaltung (16) einen ersten und zweiten Stromrichter (18, 20) enthält, die jeweils mittels eines ersten und zweiten Zwischenkreiskondensators (10, 12) mit einem ersten und zweiten Wechselrichter (6, 8) elektrisch leitend verbunden sind, **dadurch gekennzeichnet,**

a) daß ein wechselstromseitiger Eingang (22) eines ersten Brückenzweiges (24) des ersten Stromrichters (18) über eine Induktivität (26) mit einem wechselstromseitigen Eingang (28) eines ersten Brückenzweiges (30) des zweiten Stromrichters (20) verbunden ist,

b) daß ein wechselstromseitiger Eingang (32) eines zweiten Brückenzweiges (34) des ersten Stromrichters (18) über eine Induktivität (36) mit einem wechselstromseitigen Eingang (38) eines zweiten Brückenzweiges (40) des zweiten Stromrichters (20) verbunden ist,

c) daß eine Eingangsgleichspannung ($U_E$) an einem positiven gleichstromseitigen Anschluß (46) des zweiten und an einen negativen gleichstromseitigen Anschluß (48) des ersten Stromrichters (20, 18) zuführbar ist und

d) daß die Stromrichterventile (V13, V14) des zweiten Brückenzweiges (34) des ersten Stromrichters (18) und die Stromrichterventile (V21, V22) des ersten Brückenzweiges (30) des zweiten Stromrichters (20) mittels einer Steuerschaltung (52), der eingangsseitig eine Zwischenkreis-Sollspannung ($U_{Ksoll}$) und eine Eingangsgleichspannung ($U_E$) zugeführt sind, ansteuerbar sind, wogegen die anderen Stromrichterventile (V11, V12, V23, V24) der beiden Stromrichter (18, 20) mittels einer weiteren Steuerschaltung (58) getaktet ansteuerbar sind.

2. Einspeiseschaltung nach Anspruch 1, **dadurch gekennzeichnet,** daß jeweils als Induktivität (26, 36) eine Sekundärwicklung eines Transformators (42) mit großer Streuung vorgesehen ist, wobei bei Gleichspannungseinspeisung die Primärwicklung (44) überbrückbar ist.

3. Einspeiseschaltung nach Anspruch 1, **dadurch gekennzeichnet,** daß jeweils als Induktivität (26, 36) eine Drosselspule vorgesehen ist.

4. Einspeiseschaltung nach Anspruch 1 und 2, **dadurch gekennzeichnet,** daß bei Wechselspannungseinspeisung der erste und zweite Stromrichter (18, 20) elektrisch parallel schaltbar sind.

5. Einspeiseschaltung nach Anspruch 1, **dadurch gekennzeichnet,** daß die Steuerschaltung (52) einen Komparator (54) und einen Steuersatz (56) enthält.

FIG 1

FIG 2

FIG 3

FIG 4

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-204690 (ELIN-UNION)<br>* Zusammenfassung; Figur 3 *<br>--- | 1 | B60L9/30 |
| A | ELEKTRISCHE BAHNEN.<br>vol. 85, no. 11, November 1987, MUNCHEN DE<br>Seiten 367 - 372; G. PROKISCH:<br>"DIE ZWEIFREQUENZLOKOMOTIVE Rh 1146 DER<br>OESTERREICHISCHEN BUNDESBAHNEN IN<br>DREHSTROMANTRIEBSTECHNIK"<br>* Figur 1 *<br>--- | 1 | |
| A | ELEKTRISCHE BAHNEN.<br>vol. 86, no. 1, Januar 1988, MUNCHEN DE<br>Seiten 22 - 39; H. GATHMANN ET AL:<br>"UEBERSICHT UEBER DIE JUENGSTEN ENTWICKLUNGEN<br>DER DREHSTROMANTRIEBSTECHNIK BEI ELEKTRISCHEN<br>BAHNEN"<br>* Figur 13 *<br>----- | 1 | |

RECHERCHIERTE SACHGEBIETE (Int. Cl.5)

B60L
H02P

Der vorliegende Recherchenbericht wurde für alle Patentansprüche erstellt

| Recherchenort | Abschlußdatum der Recherche | Prüfer |
|---|---|---|
| DEN HAAG | 13 OKTOBER 1989 | BEYER F. |